**Europäisches Patentamt**

(19) **European Patent Office**

**Office européen des brevets**

(11) Publication number : **0 416 070 B1**

## (12) EUROPEAN PATENT SPECIFICATION

(45) Date of publication of patent specification :
**09.06.93 Bulletin 93/23**

(51) Int. Cl.$^5$ : **G01C 19/72**, G02B 6/12

(21) Application number : **90904718.5**

(22) Date of filing : **23.02.90**

(86) International application number :
**PCT/US90/00989**

(87) International publication number :
**WO 90/11491 04.10.90 Gazette 90/23**

(54) **SINGLE-POLARIZATION, INTEGRATED OPTICAL COMPONENTS FOR OPTICAL GYROSCOPES.**

(30) Priority : **27.03.89 US 329121**

(43) Date of publication of application :
**13.03.91 Bulletin 91/11**

(45) Publication of the grant of the patent :
**09.06.93 Bulletin 93/23**

(84) Designated Contracting States :
**DE FR GB**

(56) References cited :
EP-A- 0 297 338
GB-A- 2 121 532
US-A- 4 547 262
LASER UND OPTOELEKTRONIK, vol. 21, no. 1,
February 1989, (Stuttgart, DE), C. Wulf-Mathies
: "Integrated Optics for Fiberoptical Sen-
sors", pages 57-63
TECHNISCHES MESSEN T.M., volume 53, no.
9, 1986, (München, DE), K. Böhm et al. :
"Fiber-optic sensors for the measurement of
rotation rates", pages 345-349

(56) References cited :
ELECTRICAL COMMUNICATION, volume 61,
no. 4, 26 February 1987, (Brussels, BE), W.
Auch et al. : "Fiber optic gyroscope : An
advanced rotation rate sensor", pages
372-378
PATENT ABSTRACTS OF JAPAN, volume 11,
no. 12 (P-535)(2459), 13 January 1987, & JP-
A-61188502 (MATSUSHITA ELECTRIC IND CO.
LTD), 22 August 1986

(73) Proprietor : **UNITED TECHNOLOGIES
CORPORATION**
**United Technologies Building 1, Financial
Plaza
Hartford, CT 06101 (US)**

(72) Inventor : **SUCHOSKI, Paul, G., Jr.**
**14 Bay Path Drive
East Hartford, CT 06108 (US)**
Inventor : **FINDAKLY, Tala, K.**
**23 Pellinora Lane
Berkeley Heights, NJ 07922 (US)**
Inventor : **FERRAR, Carl, M.**
**114 Wildflower Road
East Hartford, CT 06118 (US)**
Inventor : **LEONBERGER, Frederick, J.**
**417 Stanley Drive
Glastonbury, CT 06033 (US)**

(74) Representative : **Waxweiler, Jean et al
OFFICE DENNEMEYER S.à.r.l. P.O. Box 1502
L-1015 Luxembourg (LU)**

## Description

Technical Field

This invention relates to integrated optics circuits (IOCs), and more particularly to IOC's for use in optical gyroscopes.

Background Art

As known, the operating principle of the fiber optic gyroscope (FOG) is the Sagnac effect. When light traverses an optic fiber loop which is rotating about an axis perpendicular to its plane, the optical transit time of the light signal varies in dependence on the loop's rotation rate. For two optical signals traversing the loop in opposite directions the Sagnac phase difference between them (S; in radians) is proportional to the rotation rate, and is given by:

$$S = \frac{2 * \pi * L * d}{\lambda * c} * \Omega \quad \text{(Equation 1)}$$

where: L is the length of the fiber loop, d is the loop diameter, $\lambda$ is the optical signal wavelength, c is the speed of light, and $\Omega$ is the loop rotation rate in radians/sec.

This difference, which serves as a measure of the rate, may be increased by using a fiber optic coil to increase the loop length (L). To alleviate the necessity of having to measure a DC value, a sinusoidal phase modulator may be used at one end of the loop to modulate the beams. The modulation acts on the counter circulating beams at different times due to the optical transit time delay in the coil, which results in a dithering of the phase difference. This improves the detection sensitivity by allowing the use of sensitive AC processing.

If opposing beams of unit intensity are added interferometrically the total intensity is:

$$I = 1/2 * (1 + \cos P) \quad \text{(Equation 2)}$$

where P is total phase difference. Bessel expansion of the intensity expression produces a component:

$$F = k * \sin(S) \quad \text{(Equation 3)}$$

at the modulation frequency f. This can be taken as an analog output of the phase dithered Sagnac interferometer. The coefficient k is:

$$k = 2 * J_1 * [2A * \sin(\pi * f * T)] \quad \text{(Equation 4)}$$

where the term $2A*\sin(\pi*f*T)$ is the dither amplitude resulting from an applied modulation frequency (f) modulation of amplitude (A), with a coil transit time T. The amplitude is maximized when f = 1/2T (the coil eigenfrequency).

The analog output F, of frequency f, is proportional to rotation at sufficiently small rates. It can be measured directly as an indication of rotation, or the output can be continuously nulled by a servo loop which adds an optical phase bias in opposition to the Sagnac phase difference. This can be achieved by adding a repetitive linearly ramped phase modulator (serrodyne modulation) at one end of the fiber coil. If the peak ramp amplitude is $2\pi$ radians, the serrodyne modulation produces an effectively constant phase difference bias between the oppositely directed beams. The phase bias amplitude is proportional to the ramp repetition frequency, which constitutes an easily measurable representation of the loop rotation rate.

FOG operation assumes the counter circulating beams travel identical paths in the absence of rotation and of applied phase bias, i.e. "reciprocity". However, different spatial modes and orthogonal polarization modes of the fiber coil are not always degenerate. Power coupled between modes can perturb the optical phase at the detector, causing drift in the FOG. Further, it may be difficult to simultaneously optimize phase modulation of the beam's desired and undesired polarization components, and gyro output error may result.

To eliminate cross coupling between spatial modes and to control polarization, prior art Sagnac gyros include both a single-spatial-mode filter and a single-polarizer filter in the beam propagation path. The filters are located in the optical path which is common to the source beam and the interfering beams; between the optical detector and the loop beam splitter. This "reciprocal configuration" confines the optical signals to a single spatial mode, and a single polarization. The polarizing filter may be a bulk optic polarizer, such as a Glan-Thompson prism which provides extinction ratios of 60 dB, or any other of a variety of fiber or integrated optic (10) polarizers. The single mode filter may comprise a short length of single-mode fiber or waveguide.

However, unless the polarizing filter extinction ratio is sufficiently high, light polarized at the filter, which may become appreciably depolarized after traversing the loop, may arrive at the detector with significant power in the undesired polarization. In some cases the filter extinction ratio must be as high as 100 to 140 dB to reduce this power to acceptable levels.

Documents showing the just described prior art are compiled in Selected Papers On Fiber Optic Gyroscopes, SPIE Milestone Series, Vol. MS8, pp. 1-637 (1989), which contains a plurality of original papers regarding the design, development and manufacture of Fiber Optic Gyroscopes.

US-A-4 547 262 discloses a proton exchange process for forming an optical waveguide and components in an optical substrate comprised of lithium tantalate. However, the process disclosed is limited to formation of "passive" optical components.

There has heretofore been lacking in the art a proton exchange process which allows for formation of "active" optic components, "active" referring to components which operate according to the well-known electrooptic effect. Examples of such "active" devices include optical modulators, which vary the local index of refraction of the waveguide in response to an applied electric field, thereby changing the phase of the optical signal passing in the vicinity thereof.

Disclosure of the Invention

The object of the present invention is to provide a fiber optic gyro (FOG) system having a high polarization extinction ratio.

According to one aspect of the invention there is provided a fiber optic gyro (FOG) system comprising:

source means, for providing a source light beam;

interferometric loop means, having optic fiber waveguides for counter circulating two light beams in phased displacement around a rotating loop, said phased displacement providing a differential phase magnitude proportional to the speed of rotation of said loop:

integrated optic circuit (IOC) means having a waveguide array disposed on a major surface of a refractive material substrate, said waveguide array including beam splitter/combiner means and including two loop guide sections, said beam splitter/combiner means for splitting said source light beam into said two light beams for counter circulation through said loop guide sections and said interferometric loop and for combining said phase displaced light beams returned from said loop into an interference signal embodying said differential phase magnitude;

detector means, responsive to said interference signal for providing a signal manifestation of said differential phase magnitude; and

means for coupling said source light beam to said IOC means and for coupling said interference signal from said IOC to said detector means;

as characterized by:

said IOC means further having modulator means disposed on said major surface for electrooptically modulating the phase of each of said two light beams; and

said waveguide array being formed in said major surface by a two step proton exchange (TSPE) process comprising the steps of:

immersing said substrate for a period of from two to sixty minutes, in a benzoic acid bath at a temperature of from 150°C to 250°C;

removing said substrate fro said bath following said step of immersing; and

annealing said substrate for a period of from one to five hours at a temperature of from 300°C to 400°C.

According to a second aspect of the invention there is provided an integrated optic circuit (IOC), for use in a fiber optic gyro (FOG) system having a light source for providing a source light beam; an interferometric loop for counter circulating two light beams around the loop at a differential phase proportional to a rotational speed of the loop; detector circuitry for detecting the differential phase magnitude by sensing the magnitude of an interference signal resulting from the combination of the counter circulating light beams; and signal coupling circuitry for presenting the source light beam from the light source to the IOC and for presenting the interference signal from the IOC to the detector circuitry; the integrated optic circuit (IOC) comprising

a refractive material substrate having a major surface; and

waveguide array means connected to the signal coupling circuitry and including beam splitter/ combiner means and including two loop guide sections, said beam splitter/combiner means for splitting the source light beam into two light beams for counter circulation through said loop guide and the interferometric loop and for combining the counter circulated light beams from the loop into an interference signal embodying the differential phase magnitude;

said IOC further having modulator means disposed on said major surface in juxtaposition to said loop guide sections for electrooptically modulating the phase of each of said two light beams; and

said waveguide array being formed in said major surface by a two step proton exchange (TSPE) process comprising the steps of:

immersing said substrate for a period of from two to sixty minutes, in a benzoic acid bath at a temperature of from 150°C to 250°C;

removing said substrate from said bath following said step of immersing; and

annealing said substrate for a period of from one to five hours at a temperature of from 300°C to 400°C.

In further accord with the present invention, the substrate material may be $LiNbO_3$ or $LiTaO_3$. In still further accord with the present invention, the substrate material has an X-cut orientation.

In still further accord with the present invention the IOC includes a beam splitter for dividing the incident light beam into two counter circulating beams for presentation to the sensing loop, and integrated optic (IO) elements for phase modulating the counter circulating beams. In still further accord with the invention, the beam splitter comprises a symmetrical Y-junction. In still further accord with the present invention, the beam splitter comprises a directional coupler.

The FOG system of the present invention uses proton exchanged (PE) waveguide structures in either $LiNbO_3$ or $LiTaO_3$ to produce an IOC having a high degree of polarization control. The IOC includes a beam splitter, such as symmetrical Y-junction or a directional coupler, phase modulators, and single mode input / output waveguides. The waveguides provide polarization extinction ratios greater than 55 dB.

These and other objects, features, and advantages of the present invention will become more apparent in light of the following detailed description of a best mode embodiment thereof, as illustrated in the accompanying Drawing.

Brief Description of Drawing

Fig. 1 is a perspective illustration of a FOG IOC embodiment according to the present invention; and
Fig. 2 is a schematic illustration of a FOG system in which the IOC embodiment of Fig. 1 may be used.

Best Mode for Carrying Out the Invention

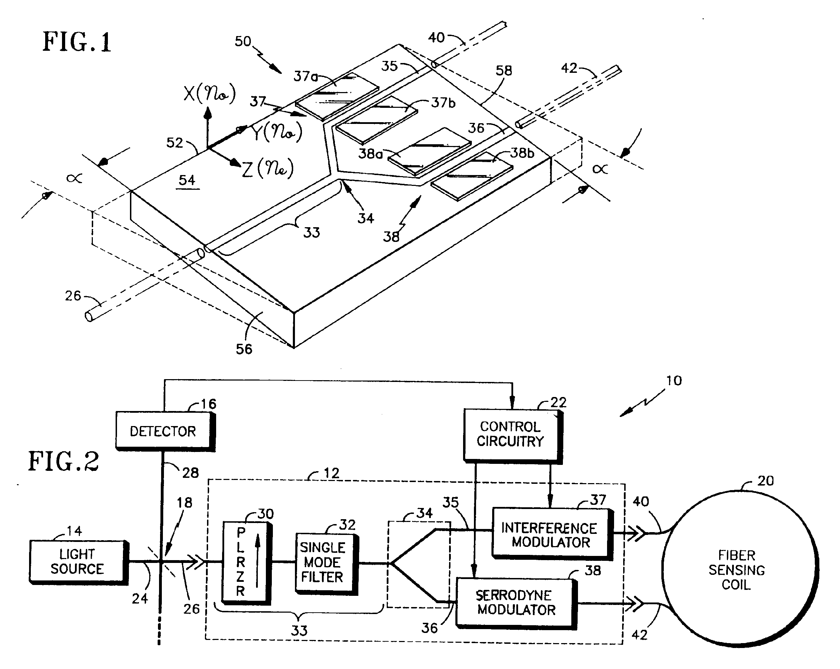

Referring first to Fig. 2, in the best mode embodiment of a FOG system 10 according to the present invention, the FOG system includes an IOC 12 which integrates several critical FOG optical functions on a single, small substrate chip. As described in detail hereinafter, inclusion of the IOC optical elements shown in Fig. 2 provides a "reciprocal configuration" FOG system. This ensures that only "non-reciprocal" effects, such as rotation and time varying propagation parameters, affect the differential phase between the counter circulating optical beams.

In addition to the IOC 12, the system 10 includes a light source 14, light detection circuitry 16, an output tap 18 (which may be a directional coupler or a beam splitter), a fiber optic sensing coil 20, and control circuitry 22. In the case of high performance FOG applications the light source may comprise a superluminescent (semiconductor) diode (SLD). The SLD provides a spectrally broad, short coherence length (less than 100 microns) optical beam. Lower performance FOG applications may use a less expensive laser diode. The source provides the coherent optical beam on output fiber 24 to the tap 18.

The tap transmits a major portion of the incident source beam, approximately 50%, through a single mode fiber optic guide 26 to the IOC 12. The detection circuitry, connected to the fiber optic guide 26, may include a known PIN-diode transimpedance amplifier detection system.

The source beam incident at the IOC is filtered by a single polarization filter 30 and a single mode filter 32 located in the IOC's "common path" waveguide section 33. This is the waveguide section which guides both the source incident beam to the sensing loop and the interference signal from the loop to the detection circuitry. The polarizing filter attenuates the undesired polarization mode. Ideally the extinction ratio (the ratio of the output power in the desired polarization mode divided by the output power in the undesired polarization mode) is as large as possible, e.g. in the range of 100 to 120 dB.

The polarization filters used in prior art FOGs typically comprise: bulk optic polarizers (such as a Glan-Thompson prism), optic fiber polarizers, or thin film polarizers on titanium diffused $LiNbO_3$ IOCs. The bulk polarizers have extinction ratios as high as 60 dB, but are difficult to interface with optical fibers and waveguides used elsewhere in the FOG. The other type prior art polarizers typically have extinction ratios smaller than 60 dB. In the proton exchanged (PE) FOG IOC of the present invention, the polarizer comprises the entire PE waveguide array disposed on the IOC, which provides extinction ratios greater than 60 dB, and which interfaces easily with connecting optic fibers.

The polarized output beam from the filter 30 is presented to a single mode filter 32, which may comprise a segment of the single-mode waveguide system on the IOC. The mode filtering provided by the filter 32 may be supplemented by that of the single-mode guide 26.

The single-polarization, single-spatial-mode optical signal from the filter 32 is presented to a beam splitter/combiner 34, which may be a Y-junction or a 3 dB directional coupler, which divides the filtered source light equally into two beams which are-directed to the respective sensing loop waveguide sections 35, 36. Guide section 35 couples the first beam through a dither modulator 37, and section 36 guides the second beam through a serrodyne modulator 38, into opposite ends 40, 42 of the fiber sensing coil 20. The beams propagate in opposite directions through the coil as first and second counter circulating beams, and are returned from the loop, through the opposite phase modulator, to the splitter/combiner 34. Upon recombination, the Sagnac differential phase produced by rotation of the loop, causes the counter circulating beams to produce an interference signal. The interference signal is then coupled back along the common path guide 33, through the mode filter and polarizer, to the detection circuitry 16, by way of output tap 18.

Each beam is modulated twice by each modulator during transit through the loop; upon entry and again upon exit. The dither modulator 37 provides phase modulation of each beam so as to cause the differential phase to dither. This dither improves measurement sensitivity by allowing for AC detection of the differential phase value. The dither is at a maximum when the modulation frequency is equal to the eigenfrequency of the fiber sensing coil.

The serrodyne modulator 38 applies a linear ramped phase modulation to each beam. If the peak ramp amplitude is $2\pi$ radians, and the flyback following each ramp segment is essentially instantaneous, the serrodyne modulation acting on oppositely directed beams at somewhat different times due to optical delay in the coil, produces an effectively constant bias to the differential phase. The bias can be controlled by a servo loop within the control circuitry 22 to continuously oppose the Sagnac phase difference, thus nulling the phase difference, as is known in the prior art. The serrodyne ramp frequency then constitutes a gyro output proportional to the loop rotation rate.

In the present invention all of the FOG system elements, except the light source 14, the detector 16, the tap 18, and the sensing coil 20, are integrated on a single IOC substrate. Future embodiments may also add the tap 18 to the IOC. This offers a number of advantages. First, the IOC may be mass produced using technology similar to that used in semiconductor manufacture. This makes.the FOG IOC less expensive than the discrete components it replaces. Second, with phase modulator (37,38) frequencies possibly extending to the gigahertz range, the large bandwidth capabilities of 10 devices is advantageous. Most importantly, the high birefringence of proton exchanged waveguides, and their intrinsic ability to guide only one polarization, preserves input polarizations in the IOC. This occurs even for components such as beamsplitters which perform poorly in this respect when fabricated in fiber optic form.

Fig. 1 is a perspective illustration of an IOC 50 according to the present invention. To provide reference to the IOC schematic representation of Fig. 2, the IOC is shown with the same fiber guide connections (26 at the input end and 40, 42 at the sensing coil end) as in Fig. 2. The IOC includes a crystalline material substrate 52 having a major surface 54 for receiving the integrated optic elements. The substrate includes fiber optic mating ends 56, 58.

The substrate material is preferably X-cut crystal; either LiNbO$_3$ or LiTaO$_3$. Z-cut and Y-cut crystal (in that order) may also be used. The substrate of Fig. 1 is X-cut crystal with an extraordinary index of refraction along the Z axis.

The IO elements disposed on the surface 54 include the waveguide array comprising the common path guide section 33, the Y-junction splitter 34, and loop guide sections 35, 36. As described in detail hereinafter, the waveguide array is fabricated by proton exchange. As a result, the array per se is a single mode, single polarization system. There is no need for separate, i.e. discrete, spatial-mode and polarization filters 30, 32 as in Fig. 2.

Further IO elements include the electrodes 37a, 37b for the dither modulator 37, and 38a, 38b for the serrodyne modulator 38. The paired electrodes are located symmetrically about the associated loop guide sections 35, 36.

The FOG IOC may be fabricated using the two step proton exchange (TSPE) process disclosed and claimed in US-A-4 984 861 by Suchoski et al, entitled: Low-Low Proton Exchanged Waveguides for Active Integrated Optic Devices, issued January 15, 1991.

Fabrication begins with deposition of a masking layer of aluminum (Al) or chromium (Cr) on the substrate surface 54. The masking layer is patterned and etched to form the Y junction splitter 34, the common path guide section 33, and the loop guide sections 35, 36. The etched mask limits the proton exchange to the patterned area. The actual channel pattern widths depend on the selected signal wavelength, but range from 3 to 10 microns.

The crystal substrate is then immersed in a concentrated benzoic acid bath for two to sixty minutes. The acid bath is at a temperature of from 150°C to 250°C. Following the bath, the crystal is annealed at an elevated temperature in the range of from 300°C to 400°C, for a period of from one to five hours. The exact set of processing conditions are dependant on the selected substrate material (whether LiNbO$_3$ or LiTaO$_3$), the wavelength, crystal cut, and the modal dispersion requirements.

The metallization for the modulator paired electrodes 37a, 37b and 38a, 38b is deposited and patterned using photolithographic techniques and electrode materials well known in the art. Electrical connections (not shown) can be made to external electronic systems by wire bonding.

The TSPE process locally increases the extraordinary refractive index (within the waveguide channels) and locally decreases the ordinary refractive index. As a result, for the Fig. 1 FOG IOC with X-cut orientation, it is only possible to support a guided optical mode polarized along the Z axis (extraordinary axis).

Reflections at the two IOC interfaces with the sensing coil contribute to FOG offset errors. These reflections occur as a result of refractive index mismatch between the fiber guides (32, 34) and the IOC mating waveguide sections. They produce severe offset errors if the two IOC to fiber interferences are equidistant (within the light source coherence length) from the Y-junction splitter. The reflections may be minimized by angling the fiber mating ends 56, 58 of the IOC by an angle $\alpha$, where $\alpha > 8°$. As shown in Fig. 1, in the preferred embodiment all endfaces of the IOC are angled at a typical bias of $\alpha = 10°$.

As described hereinbefore, additional FOG system elements, such as the tap 18 (Fig. 2), can be incorporated on the IOC. Also, the present proton exchange IOC can be used in ringresonator FOG systems as well as the interferometric type described here.

Although the invention has been shown and described with respect to a best mode embodiment thereof, it should be understood by those skilled in the art that the foregoing and various other changes, omissions, and additions in the form and detail thereof, may be made therein without departing from the scope of this invention.

## Claims

1.  A fiber optic gyro (FOG) system (10), comprising:

    source means (14), for providing a source light beam;

    interferometer loop means (20), having optic fiber waveguides for counter circulating two light beams in phased displacement around a rotating loop (20), said phased displacement providing a differential phase magnitude proportional to the speed of rotation of said loop (20);

    integrated optic circuit (IOC) means (12) having a waveguide array (33-36) disposed on a major surface (54) of a refractive material substrate (52), said waveguide array (33-36) including beam splitter/ combiner means (34) and including two loop guide sections (35,36), said beam splitter/combiner means (34) for splitting said source light beam into said two light beams for counter circulation through said loop guide sections (35,36) and said interferometric loop (20), and for combining said phase displaced light beams returned from said loop (20) into an interference signal embodying said differential phase magnitude;

    detector means (16), responsive to said interference signal for providing a signal manifestation of said differential phase magnitude; and

    means (18) for coupling said source light beam to said IOC means (12) and for coupling said interference signal from said IOC (12) to said detector means (16);

    as characterized by:

    said IOC means (12) further having modulator means (37,38) disposed on said major surface (54) for electrooptically modulating the phase of each of said two light beams; and

    said waveguide array (33-36) being formed in said major surface (54) by a two step proton exchange (TSPE) process comprising the steps of:

    immersing said substrate (52), for a period of from two to sixty minutes, in a benzoic acid bath at a temperature of from 150°C to 250°C;

    removing said substrate (52) from said bath following said step of immersing; and

    annealing said substrate (52) for a period of from one to five hours at a temperature of from 300°C to 400°C.

2.  The system of claim 1, wherein said IOC substrate material comprises $LiNbO_3$.

3.  The system of claim 1, wherein said IOC substrate material comprises $LiTaO_3$.

4.  The system of claim 2 or 3, wherein said substrate material further comprises X-cut crystal material.

5.  The system of claim 2 or 3, wherein said substrate material further comprises Z-cut crystal material.

6.  The system of claim 2 or 3, wherein said substrate material further comprises Y-cut crystal material.

7.  The system of anyone of the claims 1 to 6, wherein said beam splitter/combiner means comprises a symmetrical Y-junction.

8.  An integrated optic circuit (IOC), for use in a fiber optic gyro (FOG) system having a light source (14) for providing a source light beam; an interferometric loop (20) for counter circulating two light beams around the loop (20) at a differential phase proportional to a rotational speed of the loop (20); detector circuitry (16) for detecting the differential phase magnitude by sensing the magnitude of an interference signal resulting from the combination of the counter circulating light beams; and signal coupling circuitry (18) for presenting the source light beam from the light source (14) to the IOC (12) and for presenting the interference signal from the IOC (12) to the detector circuitry (16); the integrated optic circuit (IOC) comprising

    a refractive material substrate (12) having a major surface (54); and

    waveguide array means (33-36), connected to the signal coupling circuitry (18) and including beam splitter/combiner means (34) and including two loop guide sections (35,36), said beam splitter/combiner means (34) for splitting the source light beam into two light beams for counter circulation through said loop guide sections (35,36) and the interferometric loop (20) and for combining the counter circulated light beams from the loop (20) into an interference signal embodying the differential phase magnitude; as characterized by:

    said IOC (12) further having modulator means (37,38) disposed on said major surface (54) in juxtaposition to said loop guide sections (35,36), for electrooptically modulating the phase of each of said two light beams; and

    said waveguide array (33-36) being formed in said major surface (54) by a two step proton exchange (TSPE) process comprising the steps of:

    immersing said substrate (52), for a period of from two to sixty minutes, in a benzoic acid bath at a temperature of from 150°C to 250°C;

    removing said substrate (52) from said bath following said step of immersing; and

    annealing said substrate (52) for a period of from one to five hours at a temperature of from 300°C to 400°C.

9. The system of claim 8, wherein said IOC substrate material comprises LiNbO$_3$.

10. The system of claim 8, wherein said IOC substrate comprises LiTaO$_3$.

11. The system of claim 9 or 10, wherein said substrate material further comprises X-cut crystal material.

12. The system of claim 9 or 10, wherein said substrate material further comprises Z-cut crystal material.

13. The system of claim 9 or 10, wherein said substrate material further comprises Y-cut crystal material.

14. The system of anyone of the claims 8 to 13, wherein said beam splitter/combiner means comprises a symmetrical Y-junction.


**Patentansprüche**

1. Faseroptikgyro(FOG)-System (10), mit:
einer Quelleneinrichtung (14) zum Liefern eines Quellenlichtstrahls;
einer Interferometerschleifeneinrichtung (20) mit Lichtleitfaserwellenleitern zum gegenläufigen Zirkulieren von zwei Lichtstrahlen in phasierter Verschiebung um eine drehende Schleife (20), wobei die phasierte Verschiebung eine differentielle Phase ergibt, deren Größe zu der Drehgeschwindigkeit der Schleife (20) proportional ist;
einer integrierten optischen Schaltungs(IOC)-Einrichtung (12), die eine Wellenleitermatrix (33-36) hat, welche auf einer Hauptoberfläche (54) eines Substrats (52) aus Brechungsmaterial angeordnet ist, wobei die Wellenleiteranordnung (33-36) eine Strahl-Zerleger/Kombinierer-Einrichtung (34) und zwei Schleifenleiterabschnitte (35, 36) aufweist, wobei die Strahl-Zerleger/Kombinierer-Einrichtung (34) vorgesehen ist zum Zerlegen des Quellenlichtstrahls in die beiden Lichtstrahlen zum gegenläufigen Zirkulieren durch die Schleifenleiterabschnitte (35, 36) und die interferometrische Schleife (20) und zum Kombinieren der phasenverschobenen Lichtstrahlen, die aus der Schleife (20) zurückgeleitet werden, zu einem Interferenzsignal, das die Größe der differentiellen Phase darstellt;
einer Detektoreinrichtung (16), die auf das Interferenzsignal hin eine Signaldarstellung der Größe der differentiellen Phase liefert; und
einer Einrichtung (18) zum Koppeln des Quellenlichtstrahls mit der IOC-Einrichtung (12) und zum Koppeln des Interferenzsignals aus der IOC (12) mit der Detektoreinrichtung (16);
dadurch gekennzeichnet,
daß die IOC-Einrichtung (12) weiter eine Modulatoreinrichtung (37, 38) aufweist, die auf der Hauptoberfläche (54) angeordnet ist, zum elektrooptischen Modulieren der Phase jedes der beiden Lichtstrahlen; und
daß die Wellenleiteranordnung (33-36) in der Hauptoberfläche (54) durch einen zweistufigen Protonenaustausch (TSPE) - Prozeß gebildet wird, der folgende Schritte beinhaltet: Eintauchen des Substrats (52) für eine Zeitspanne von zwei bis sechzig Minuten in ein Benzoesäurebad bei einer Temperatur von 150 °C bis 250 °C; Entnehmen des Substrats (52) aus dem Bad im Anschluß an den Schritt des Eintauchens; und Glühen des Substrats (52) für eine Zeitspanne von einer bis fünf Stunden bei einer Temperatur von 300 °C bis 400 °C.

2. System nach Anspruch 1, wobei das IOC-Substratmaterial LiNbO$_3$ umfaßt.

3. System nach Anspruch 1, wobei das IOC-Substratmaterial LiTaO$_3$ umfaßt.

4. System nach Anspruch 2 oder 3, wobei das Substratmaterial weiter X-Schnitt-Kristallmaterial umfaßt.

5. System nach Anspruch 2 oder 3, wobei das Substratmaterial weiter Z-Schnitt-Kristallmaterial umfaßt.

6. System nach Anspruch 2 oder 3, wobei das Substratmaterial weiter Y-Schnitt-Kristallmaterial umfaßt.

7. System nach einem der Ansprüche 1 bis 6, wobei die Stahl-Zerleger/Kombinierer-Einrichtung eine symmetrische Y-Verzweigung umfaßt.

8. Integrierte optische Schaltung (IOC) zur Verwendung in einem Faseroptikgyro(FOG)-System, das eine Lichtquelle (14) hat zum Liefern eines Quellenlichtstrahls; eine interferometrische Schleife (20) zum gegenläufigen Zirkulieren von zwei Lichtstrahlen um die Schleife (20) mit einer differentiellen Phase, die zu einer Drehgeschwindigkeit der Schleife (20) proportional ist; eine Detektorschaltungsanordnung (16) zum Erfassen der Größe der differentiellen Phase durch Abfühlen der Größe eines Interferenzsignals, das aus der Kombination der gegenläufig zirkulierenden Lichtstrahlen resultiert; und eine Signalkopplungsschaltungsanordnung (18), um den Quellenlichtstrahl aus der Lichtquelle (14) der IOC (12) darzubieten und das Interferenzsignal aus der IOC (12) an die Detektorschaltungsanordnung (16) anzulegen; wobei die integrierte optische Schaltung (IOC) umfaßt

ein Brechungsmaterialsubstrat (12), das eine Hauptoberfläche (54) hat; und

eine Wellenleiteranordnungseinrichtung (33-36), die mit der Signalkopplungsschaltungsanordnung (18) verbunden ist und eine Strahl-Zerleger/Kombinierer-Einrichtung (34) sowie zwei Schleifenleiterabschnitte (35, 36) aufweist, wobei die Strahl-Zerleger/Kombinierer-Einrichtung (34) vorgesehen ist zum Zerlegen des Quellenlichtstrahls in zwei Lichtstrahlen zum gegenläufigen Zirkulieren durch die Schleifenleiterabschnitte (35, 36) und die interferometrische Schleife (20) und zum Kombinieren der gegenläufig zirkulierten Lichtstrahlen aus der Schleife (20) zu einem Interferenzsignal, das die Größe der differentiellen Phase darstellt, dadurch gekennzeichnet,

daß die IOC (12) weiter eine Modulatoreinrichtung (37, 38) hat, die auf der Hauptoberfläche (54) neben den Schleifenleiterabschnitten (35, 36) angeordnet ist, um die Phase jedes der beiden Lichtstrahlen elektrooptisch zu modulieren; und

daß die Wellenleiteranordnung (33, 36) in der Hauptoberfläche (54) durch einen zweistufigen Protonenaustausch (TSPE)-Prozeß gebildet ist, welcher die Schritte beinhaltet:

Eintauchen des Substrats (52) für eine Zeitspanne von zwei bis sechzig Minuten in ein Benzoesäurebad bei einer Temperatur von 150 °C bis 250 °C;

Entnehmen des Substrats (52) aus dem Bad im Anschluß an den Schritt des Eintauchens; und Glühen des Substrats (52) für eine Zeitspanne von einer bis fünf Stunden bei einer Temperatur von 300 °C bis 400 °C.

9. System nach Anspruch 8, wobei das IOC-Substratmaterial LiNbO$_3$ umfaßt.

10. System nach Anspruch 8, wobei das IOC-Substrat LiTaO$_3$ umfaßt.

11. System nach Anspruch 9 oder 10, wobei das Substratmaterial weiter X-Schnitt-Kristallmaterial umfaßt.

12. System nach Anspruch 9 oder 10, wobei das Substratmaterial weiter Z-Schnitt-Kristallmaterial umfaßt.

13. System nach Anspruch 9 oder 10, wobei das Substratmaterial weiter Y-Schnitt-Kristallmaterial umfaßt.

14. System nach einem der Ansprüche 8 bis 13, wobei die Strahl-Zerleger/Kombinierer-Einrichtung eine symmetrische Y-Verzweigung umfaßt.

## Revendications

1. Système de gyroscope optique à fibres (FOG) constitué de :
   - moyens source (14) pour fournir un faisceau lumineux de source,
   - moyens de boucle interférométriques (20) comportant des guides d'onde à fibres optiques pour réaliser une circulation antagoniste de deux faisceaux lumineux en déplacement progressif autour d'une boucle en rotation (20), le déplacement progressif fournissant une amplitude de phase différentielle proportionnelle à la vitesse de rotation de ladite boucle (20),
   - moyens (12) de circuit optique intégré (IOC) comportant un réseau guide d'onde (33-36) disposé sur une surface principale (54) d'un substrat (52) en un matériau susceptible de réfraction, le réseau guide d'onde (33-36) comportant des moyens (34) combinateurs/séparateurs de faisceau (34) et comprenant deux sections guide de boucle (35,36), les moyens combinateurs/séparateurs de faisceau séparant le faisceau lumineux de source en deux faisceaux lumineux, pour réaliser une circulation antagoniste au travers des sections guide de boucle (35,36) et de ladite boucle interferométrique (20) et pour combiner les faisceaux de lumière déplacés en phase qui retournent de ladite boucle (20), dans un signal d'interférence renfermant l'amplitude de phase différentielle,
   - moyens détecteurs (16) liés au signal d'interférence pour fournir un signal d'existence de l'amplitude de phase différentielle,
   - moyens (18) pour coupler le faisceau de lumière de source aux moyens IOC (12) et pour coupler le signal d'interférence du circuit IOC (12) aux moyens détecteurs (16), caractérisé en ce que :
   - les moyens IOC (12) comportent de plus des moyens modulateurs (37,38) disposés sur la surface principale (54) pour réaliser la modulation optoélectrique de la phase de chacun des deux faisceaux lumineux,
   - le réseau guide d'onde (33-36) étant formé sur la surface principale (54) par un procédé d'échange de proton en deux étapes (TSPE) comprenant les étapes consistant à :

   immerger le substrat (52) pendant une période de deux à soixante minutes dans un bain d'acide benzoïque à une température de 150°C à 250°C,

ôter le substrat (52) du bain,

recuire le substrat (52) pendant une durée de une à cinq heures à une température de l'ordre de 300°C à 400°C.

2. Système suivant la revendication 1 caractérisé en ce que le matériau du substrat du circuit IOC est constitué de $LiNbO_3$.

3. Système suivant la revendication 1 caractérisé en ce que le matériau du substrat du circuit IOC est constitué de $LiTaO_3$.

4. Système suivant l'une des revendications 2 ou 3 caractérisé en ce que le matériau du substrat est constitué d'un matériau cristallin à coupe en X.

5. Système suivant l'une des revendications 2 ou 3 caractérisé en ce que le matériau du substrat est constitué d'un matériau cristallin à coupe en Z.

6. Système suivant l'une des revendications 2 ou 3 caractérisé en ce que le matériau du substrat est constitué d'un matériau cristallin à coupe en Y.

7. Système suivant l'une des revendications 1 à 6 caractérisé en ce que les moyens combinateurs/séparateurs de faisceau sont constitués d'une jonction symétrique en Y .

8. Circuit optique intégré IOC, destiné à être utilisé dans un système de gyroscope optique à fibres (FOC) comportant une source lumineuse (14) pour fournir un faisceau lumineux de source, une boucle interférométrique (20), pour réaliser une circulation antagoniste de deux faisceaux lumineux autour de la boucle (20), à une phase différentielle proportionnelle à la vitesse de rotation de la boucle (20), un circuit détecteur (16) pour détecter l'amplitude de phase différentielle par détection de l'amplitude d'un signal d'interférence provenant de la combinaison des faisceaux lumineux à circulation antagoniste, un circuit d'accouplement de signal (18) pour fournir le faisceau lumineux de source provenant de la source lumineuse (14) au circuit IOC (12) et pour fournir le signal d'interférence du circuit IOC (12) au circuit détecteur (16), le circuit optique intégré IOC étant constitué de :

- un substrat en un matériau susceptible de réfraction (12) ayant une surface principale (54),
- moyens de réseau guide d'onde (33,36) reliés au circuit d'accouplement de signal (18) et comprenant des moyens combinateurs/séparateurs (34) de faisceau et comprenant deux sections guide de boucle (35,36), lesdits moyens combinateurs/séparateurs (34) de faisceau assurant la séparation du faisceau lumineux de source en deux faisceaux lumineux pour réaliser une circulation antagoniste au travers des sections guide de boucle (35,36) et de la boucle interférométrique (20) et pour assurer la combinaison des faisceaux lumineux à circulation antagoniste de la boucle (20) dans un signal d'interférence englobant l'amplitude de phase différentielle, caractérisé en ce que :

- les moyens IOC (12) comportent de plus des moyens modulateurs (37,38) disposés sur la surface principale (54) en juxtaposition aux éléments guide de boucle (35,36), pour réaliser la modulation optoélectrique de la phase de chacun des deux faisceaux lumineux,
- le réseau guide d'onde (33,36) étant formé sur la surface principale (54) par un procédé d'échange de proton en deux étapes (TSPE) comprenant les étapes consistant à :

immerger le substrat (52) pendant une période de deux à soixante minutes dans un bain d'acide benzoïque à une température de 150°C à 250°C,

ôter le substrat (52) du bain,

recuire le substrat (52) pendant une durée de une à cinq heures à une température de l'ordre de 300°C à 400°C.

9. Système suivant la revendication 8 caractérisé en ce que le matériau du substrat (IOC) est constitué de $LiNbO_3$.

10. Système suivant la revendication 8 caractérisé en ce que le substrat du circuit IOC est constitué de $LiTaO_3$.

11. Système suivant la revendication 9 ou 10 caractérisé en ce que le matériau du substrat est constitué d'un matériau cristallin à coupe en X.

12. Système suivant la revendication 9 ou 10 caractérisé en ce que le matériau du substrat est constitué d'un matériau cristallin à coupe en Z.

13. Système suivant la revendication 9 ou 10 caractérisé en ce que le matériau du substrat est constitué d'un matériau cristallin à coupe en Y.

14. Système suivant l'une quelconque des revendications 8 à 13 caractérisé en ce que les moyens combinateurs/séparateurs de faisceau sont constitués d'une jonction symétrique en Y.

**FIG.1**

**FIG.2**